# EUROPEAN PATENT SPECIFICATION

(11) **EP 4 328 777 B1**
(45) Date of publication and mention of the grant of the patent: **25.12.2024**
(21) Application number: 23184605.6
(22) Date of filing: 11.07.2023
(51) Int. Cl.: G06F 21/60, G06F 21/62, H04L 9/00

(54) **METHOD FOR PROTECTING DATA BASED ON PRIVATE SET UNION PROTOCOL, AND APPARATUS IMPLEMENTING THE SAME METHOD**
VERFAHREN ZUM SCHUTZ VON DATEN AUF DER BASIS EINES PRIVATEN SET-UNION-PROTOKOLLS UND VORRICHTUNG ZUR IMPLEMENTIERUNG DES VERFAHRENS
PROCÉDÉ DE PROTECTION DE DONNÉES BASÉ SUR UN PROTOCOLE D'UNION D'ENSEMBLE PRIVÉ, ET APPAREIL METTANT EN UVRE LE MÊME PROCÉDÉ

(30) Priority: 26.08.2022 KR 20220107226; 28.10.2022 KR 20220141508
(43) Date of publication of application: 28.02.2024
(73) Proprietor: Samsung SDS Co., Ltd., Seoul (KR)
(72) Inventor: Son, Yong Ha, Seoul 05510 (KR); Han, Kyoo Hyung, Seoul 05510 (KR); Kim, Seong Kwang, Seoul 05510 (KR)
(74) Representative: Glawe, Delfs, Moll

(56) References cited:
- YU CHEN ET AL: "Private Set Operations from Multi-Query Reverse Private Membership Test", vol. 20220526:074413, 26 May 2022 (2022-05-26), pages 1 - 27, XP061075251, Retrieved from the Internet <URL:https://eprint.iacr.org/archive/2022/652/1653551053.pdf> [retrieved on 20220531]
- GARIMELLA GAYATHRI ET AL: "Private Set Operations from Oblivious Switching", 1 January 2021, TOPICS IN CRYPTOLOGY - CT-RSA 2020 : THE CRYPTOGRAPHERS' TRACK AT THE RSA CONFERENCE 2020, SAN FRANCISCO, CA, USA, FEBRUARY 24-28, 2020, PAGE(S) 591 - 617, XP047596234

## Description

### BACKGROUND

### 1. Technical Field

The present disclosure relates to a method for protecting data based on a private set union (PSU) protocol and an apparatus for implementing the same method, and more particularly, to a method for protecting data based on a PSU protocol for protecting information of each terminal using the PSU protocol when data is transmitted and received between different terminals, and an apparatus for implementing the same method.

### 2. Description of the Related Art

As regulations on data protection have been strengthened due to concerns over personal information infringement, which has recently increased socially, research on personal information protection technology is being actively conducted, centered on global companies that want to utilize users' personal or sensitive information.

The global companies often want to integrate information stored in various platforms and DBs, analyze the information, and use the information for marketing and sales strategies. However, there are often legal restrictions on integrating information even within the same company.

In particular, if the entire data is simply sent to a central server for data integration, an intersection between the datasets is completely revealed.

Under such a background, private set union (PSU) technology, which is a protocol that does not reveal any information other than the union when two sets are given, has attracted attention.

Compared to private set interaction (PSI) technology that calculates an intersection, the PSU technology may cause a problem in securing data safety in that the sets know each other what elements each does not have.

On the other hand, in the case of the PSI protocol, a hash table preprocessing technique is used to determine whether each element is in the intersection. In this case, the sets given as input are appropriately divided into hash tables, and intersection calculation is performed for each bin.

The hash table preprocessing technology guarantees safety only in the case of the PSI protocol, and may not guarantee data safety in that additional information on the intersection may be inferred when an element of the other party is received in the case of being applied to the PSU protocol.

Accordingly, in order to address issues related to the hash table preprocessing in the PSU protocol, a shuffle idea has recently been proposed that randomly mixes the elements to be sent so that the order of each bin is not known after performing the hash table preprocessing.

However, when shuffle is used in the PSU protocol, it is not applied as a simple way for the sending side to send elements alone in random order. In practice, additional interactions are required, which causes a problem in that the amount of communication increases rapidly as the number of calculation increases. In particular, when shuffle is used in the PSU technology, it may take several times the amount of communication compared to the PSI technology that only performs the hash table preprocessing.

Therefore, in using the PSU protocol, a technology capable of solving the problem of the increased amount of communication when using shuffle while ensuring safety during data transmission is required. YU CHEN ET AL: "Private Set Operations from Multi-Query Reverse Private Membership Test",IACR, INTERNATIONAL ASSOCIATION FOR CRYPTOLOGIC RESEARCH,vol. 20220526:074413 26 May 2022 (2022-05-26), pages 1-27"Retrieved from the Internet:URL:https://eprint.iacr.org/archive/2022/652/1653551053.pdf is part of the prior-art.

### SUMMARY

Aspects of the present disclosure provide a method for protecting data based on a PSU protocol capable of safely providing information on a union without leakage of information on an intersection between datasets in using the PSU protocol when transmitting data between terminals, and an apparatus for implementing the same method.

Aspects of the present disclosure also provide a method for protecting data based on a PSU protocol capable of drastically reducing the amount of communication that increases when shuffling is performed to prevent additional information leakage in using the PSU protocol when transmitting data between terminals, and an apparatus for implementing the same method.

Aspects of the present disclosure also provide a method for protecting data based on a PSU protocol capable of preventing an increase in the amount of communication by adding a minimum calculation process of compressing a length of an input vector when shuffling is performed in using the PSU protocol when transmitting data between terminals, and an apparatus for implementing the same method.

However, aspects of the present disclosure are not restricted to those set forth herein. The above and other aspects of the present disclosure will become more apparent to one of ordinary skill in the art to which the present disclosure pertains by referencing the detailed description of the present disclosure given below.

According to an aspect of the present disclosure, there is provided a method for protecting data based on a private set union (PSU) protocol, performed by a first computing device for transmitting and receiving data to and from a second computing device. The method comprises generating a Boolean vector for a first information set, based on whether or not each of a plurality of first groups that are groups of elements of the first information set stored in the first computing device is the same as each of a plurality of second groups that are groups of elements of a second information set stored in the second computing device, obtaining a random vector for the first information set as a result of shuffling performed by using the Boolean vector generated by the first computing device as an input and using order information and encryption information selected by the second computing device as inputs, and generating information on a union of the first information set and the second information set based on the random vector.

In some embodiments, the generating of the Boolean vector for the first information set may include generating the plurality of first groups by grouping the elements of the first information set based on a hash value.

In some embodiments, the generating of the Boolean vector for the first information set may include generating a first tag vector corresponding to each of the plurality of first groups.

In some embodiments, the generating of the Boolean vector for the first information set may include generating the Boolean vector based on whether the first tag vector and a second tag vector generated to correspond to each of the plurality of second groups in the second computing device have the same value.

In some embodiments, the generating of the Boolean vector may include calculating a plurality of Boolean shares having a value of 1 if each element of the first tag vector and each element of the second tag vector are the same and having a value of 0 if each element of the first tag vector and each element of the second tag vector are not the same, and obtaining a Boolean vector for the first information set by combining the plurality of Boolean shares.

In some embodiments, sizes of each element of the first tag vector and each element of the second tag vector may be set to 40 + log N (where N is a length of the vector and is a natural number greater than or equal to 2).

In some embodiments, the obtaining the random vector for the first information set as the result of shuffling may include setting the Boolean vector generated by the first computing device as an input of the shuffling, and obtaining the random vector for the first information set as a result of performing the shuffling based on information on a permutation function randomly selected for changing an arrangement order of the plurality of second groups in the second computing device and a masking vector selected for encryption processing for the permutation function being set as the input of the shuffling.

In some embodiments, the random vector for the first information set may be a first random vector, and the generating of the information on the union of the first information set and the second information set may include obtaining information on a second random vector calculated by applying the permutation function and the masking vector to the Boolean vector for the second information set in the second computing device, and identifying whether each element of the first random vector and each element of the second random vector are the same.

In some embodiments, the generating of the information on the union of the first information set and the second information set may include performing oblivious transfer (OT) with the second computing device using the first random vector and the second random vector, and outputting information on a difference set between the first information set and the second information set as a result of performing the OT.

In some embodiments, the method may further comprise transmitting the information on the union of the first information set and the second information set to an external server.

According to an aspect of the present disclosure, there is provided a method for protecting data based on a private set union (PSU) protocol, performed by a first computing device for transmitting and receiving data to and from a second computing device. The method comprises: obtaining, by the first computing device, information on a first union of a first information set stored in the first computing device and a second information set stored in the second computing device by communicating with the second computing device, and transmitting the information on the first union to an external server.

In some embodiments, the method may further comprise communicating, by the first computing device, with a third computing device, obtaining a second union of the first union obtained by the first computing device and a third information set stored in the third computing device, and transmitting information on the second union to the external server.

In some embodiments, the obtaining of the information on the first union of the first information set stored in the first computing device and the second information set stored in the second computing device may include generating a Boolean vector for the first information set, based on whether or not each of a plurality of first groups that are groups of elements of the first information set stored in the first computing device is the same as each of a plurality of second groups that are groups of elements of the second information set stored in the second computing device, and generating information on the first union of the first information set and the second information set based on a random vector for the first information set obtained as a result of shuffling performed by using the Boolean vector generated by the first computing device as an input and using order information and encryption information selected by the second computing device as inputs.

In some embodiments, the generating of the Boolean vector for the first information set may include generating the plurality of first groups by grouping the elements of the first information set based on a hash value, and generating a first tag vector corresponding to each of the plurality of first groups.

In some embodiments, the random vector for the first information set may be a first random vector, and the generating of the information on the first union of the first information set and the second information set may include obtaining information on a second random vector for the second information set calculated by applying the order information and the encryption information to the Boolean vector for the second information set in the second computing device, and generating the information on the first union based on whether each element of the first random vector and each element of the second random vector are the same.

According to an aspect of the present disclosure, there is provided a first computing device. The first computing device comprises: a network interface configured to communicate with a second computing device, one or more processors, a memory configured to load a computer program executed by the processor, and a storage configured to store the computer program, wherein the computer program may include instructions for performing: an operation generating a Boolean vector for a first information set, based on whether or not each of a plurality of first groups that are groups of elements of the first information set stored in the first computing device is the same as each of a plurality of second groups that are groups of elements of a second information set stored in the second computing device, an operation of obtaining a random vector for the first information set as a result of shuffling performed by using the Boolean vector generated by the first computing device as an input and using order information and encryption information selected by the second computing device as inputs, and an operation of generating information on a union of the first information set and the second information set based on the random vector.

In some embodiments, the operation of generating of the Boolean vector for the first information set may include an operation of generating the plurality of first groups by grouping the elements of the first information set based on a hash value, and an operation of generating a first tag vector corresponding to each of the plurality of first groups.

In some embodiments, the operation of obtaining the random vector for the first information set as the result of shuffling may include an operation of setting the Boolean vector generated by the first computing device as an input of the shuffling, and an operation of obtaining the random vector for the first information set as a result of performing the shuffling based on information on a permutation function randomly selected for changing an arrangement order of the plurality of second groups in the second computing device and a masking vector selected for encryption processing for the permutation function being set as the input of the shuffling.

In some embodiments, the random vector for the first information set may be a first random vector, and the operation of generating of the information on the union of the first information set and the second information set may include an operation of obtaining information on a second random vector calculated by applying the permutation function and the masking vector to the Boolean vector for the second information set in the second computing device, and an operation of generating the information on the first union based on whether each element of the first random vector and each element of the second random vector are the same.

In some embodiments, the operation of generating of the information on the union of the first information set and the second information set may include an operation of performing oblivious transfer (OT) with the second computing device using the first random vector and the second random vector, and an operation of outputting information on a difference set between the first information set and the second information set as a result of performing the OT.

### BRIEF DESCRIPTION OF THE DRAWINGS

The above and other aspects and features of the present disclosure will become more apparent by describing in detail exemplary embodiments thereof with reference to the attached drawings, in which:
FIG. 1 is a system configuration diagram according to an exemplary embodiment of the present disclosure;
FIG. 2 is a flowchart for explaining a method for protecting data based on a PSU protocol according to an exemplary embodiment of the present disclosure;
FIGS. 3 to 6 are flowcharts for explaining detailed processes of some steps illustrated in FIG. 2;
FIG. 7 is an example illustrating input information and output information of a PSU protocol according to some exemplary embodiments of the present disclosure;
FIG. 8 is an example of information input and output at each step of the entire process of the PSU protocol according to some exemplary embodiments of the present disclosure;
FIG. 9 is an example illustrating a preprocessing process for generating a tag vector according to some exemplary embodiments of the present disclosure;
FIG. 10 is an example of Equations for generating vectors used in each step of the entire process of FIG. 8;
FIG. 11 is a system configuration diagram according to another exemplary embodiment of the present disclosure;
FIG. 12 is a flowchart for explaining a method for protecting data based on a PSU protocol according to another exemplary embodiment of the present disclosure;
FIG. 13 is a flowchart for explaining steps additionally performed after each step of FIG. 12 is performed; and
FIG. 14 is a hardware configuration diagram of an exemplary computing device capable of implementing methods according to some exemplary embodiments of the present disclosure.

### DETAILED DESCRIPTION OF THE EMBODIMENTS

Hereinafter, preferred embodiments of the present disclosure will be described with reference to the attached drawings. The advantages and features of the present disclosure and methods of accomplishing the same may be understood more readily by reference to the following detailed description of preferred embodiments and the accompanying drawings. The present disclosure may, however, be embodied in many different forms and should not be construed as being limited to the embodiments set forth herein. Rather, these embodiments are provided so that this disclosure will be thorough and complete and will fully convey the concept of the disclosure to those skilled in the art, and the present disclosure will only be defined by the appended claims.

In adding reference numerals to the components of each drawing, it should be noted that the same reference numerals are assigned to the same components as much as possible even though they are shown in different drawings. In addition, in describing the present disclosure, when it is determined that the detailed description of the related well-known configuration or function may obscure the gist of the present disclosure, the detailed description thereof will be omitted.

Unless otherwise defined, all terms used in the present specification (including technical and scientific terms) may be used in a sense that can be commonly understood by those skilled in the art. In addition, the terms defined in the commonly used dictionaries are not ideally or excessively interpreted unless they are specifically defined clearly. The terminology used herein is for the purpose of describing particular embodiments only and is not intended to be limiting of the disclosure. In this specification, the singular also includes the plural unless specifically stated otherwise in the phrase.

In addition, in describing the component of this disclosure, terms, such as first, second, A, B, (a), (b), can be used. These terms are only for distinguishing the components from other components, and the nature or order of the components is not limited by the terms. If a component is described as being "connected," "coupled" or "contacted" to another component, that component may be directly connected to or contacted with that other component, but it should be understood that another component also may be "connected," "coupled" or "contacted" between each component.

The terms "comprise", "include", "have", etc. when used in this specification, specify the presence of stated features, integers, steps, operations, elements, components, and/or combinations of them but do not preclude the presence or addition of one or more other features, integers, steps, operations, elements, components, and/or combinations thereof.

Hereinafter, some embodiments of the present disclosure will be described in detail with reference to the accompanying drawings.

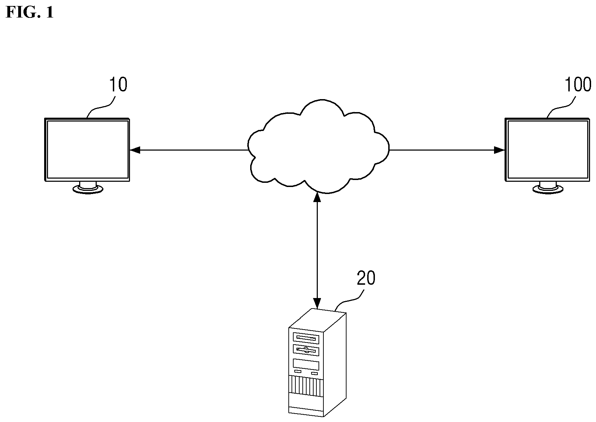

FIG. 1 illustrates a configuration of a system according to an embodiment of the present disclosure. Referring to FIG. 1, a system according to an exemplary embodiment of the present disclosure includes a first computing device 100, a second computing device 10, and a server 20, and the first computing device 100 is connected to the second computing device 10 and the server 20 through a network.

The first computing device 100 and the second computing device 10 are terminals that store data generated by an execution of various types of installed applications and data stores data stored in its own database or acquired from an external device, and may be, for example, any one of a mobile computing device such as a smart phone, tablet personal computer (PC), laptop PC, personal digital assistant (PDA), and the like, and a stationary computing device such as a desktop PC.

The server 20 is a device that receives and stores calculation results between data sets stored in each of the first computing device 100 and the second computing device 10, and may be provided as a stationary computing device such as a server or a PC. Here, the calculation result between the datasets that the server 20 receives from either the first computing device 100 or the second computing device 10 is, for example, information on a union of the datasets stored in the two devices. The server 20 may provide the calculation result between stored and managed datasets to an external terminal so as to be used for data analysis.

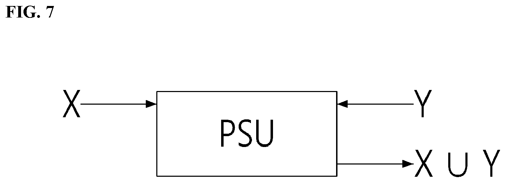

Referring to FIG. 7, the first computing device 100 may generate information on a union of a first information set Y and a second information set X by applying a private set union (PSU) protocol to the first information set Y stored in the device itself and the second information set X stored in the second computing device 10 connected through the network.

In this case, the first computing device 100 may generate a union of the first information set Y and the second information set X by analyzing whether each element of the first information set Y is included in the second information set X using the PSU protocol, even without performing an operation of receiving the elements of the second information set X of the second computing device 10 itself.

As an exemplary embodiment, in applying the PSU protocol to the first information set Y and the second information set X, the first computing device 100 may perform preprocessing using a hash table and oblivious shuffling.

In this case, the first computing device 100 may significantly reduce the amount of communication compared to a case in which a Boolean vector is not used, by using the Boolean vector as an input vector when performing the oblivious shuffling.

According to the configuration of the system of the present disclosure as described above, it is possible to safely provide information on the union without information leakage on the intersection between datasets in using the PSU protocol when transmitting data between the terminals, and it is possible to drastically reduce the increased amount of communication when performing shuffling to prevent additional information leakage.

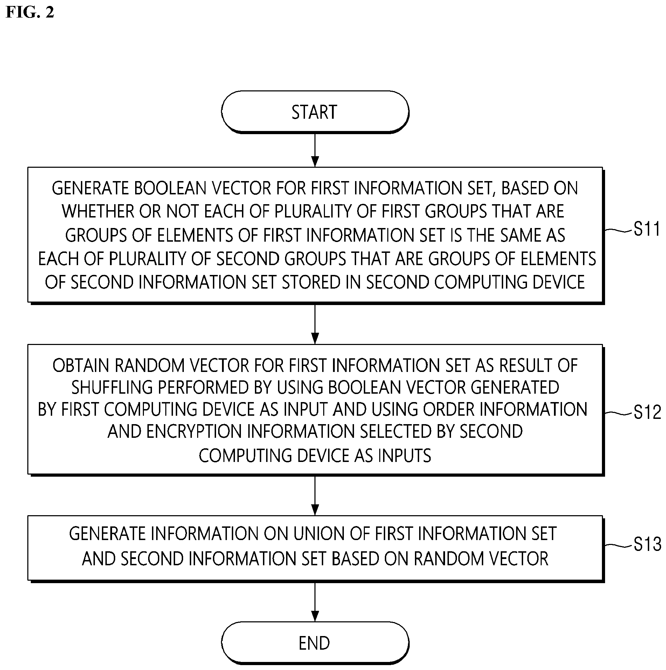

FIG. 2 is a flowchart for explaining a method for protecting data based on a PSU protocol according to an exemplary embodiment of the present disclosure.

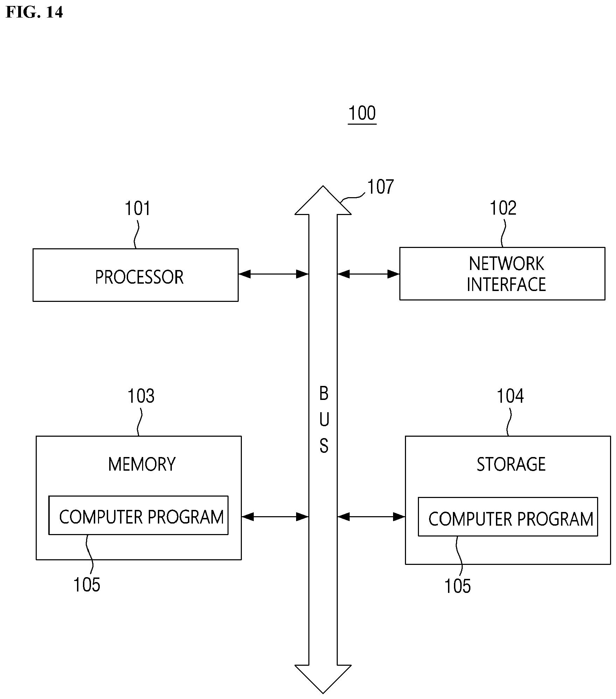

A method for protecting data based on a PSU protocol according to an exemplary embodiment of the present disclosure may be executed by a computing device 100 illustrated in FIG. 14. The first computing device 100 executing the method according to the present exemplary embodiment may be a computing device having an application program execution environment. The first computing device 100 may be, for example, a device capable of performing an arithmetic function, such as a PC, server, laptop computer, or smart phone.

It should be noted that description of a subject performing some operations included in the method according to an exemplary embodiment of the present disclosure may be omitted, and in such case, the subject is the first computing device 100.

According to an exemplary embodiment of the present disclosure described below, in a union calculation between the datasets using the PSU protocol, an increase in the amount of communication may be prevented when shuffling is performed to prevent additional information leakage.

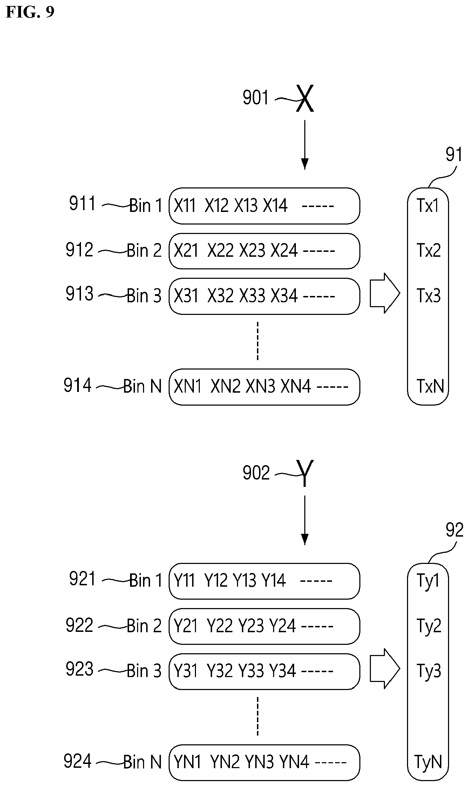

First, in operation S11, the first computing device 100 generates a Boolean vector -4 (*b̅_{Y}*) for the first information set Y, based on whether or not each of a plurality of first groups (see reference numerals 921 to 924 in FIG. 9) that are groups of elements of the first information set Y stored therein is the same as each of a plurality of second groups (see reference numerals 911 to 914 in FIG. 9) that are groups of elements of the second information set X stored in the second computing device 10.

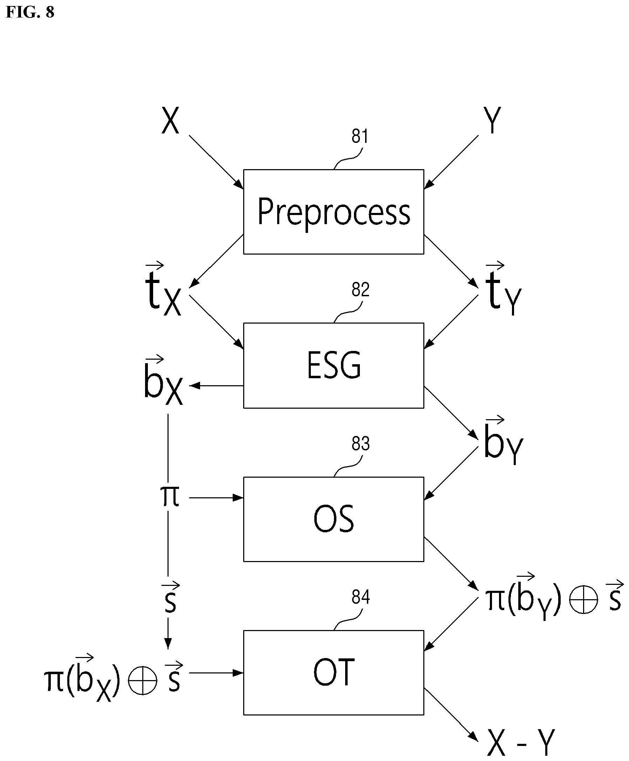

Operation S11 corresponds to a preprocessing step 81 and an equality share generation (ESG) step 82 of the entire process of the PSU protocol illustrated in FIG. 8. In the preprocessing step 81, an operation of grouping the information sets (X, Y) using a hash value and generating tags (*t̅_{X}*,*t̅_{Y}*) is performed, and in the ESG step 82, Boolean vectors (*b̅_{X}*, *b̅_{Y}*) are generated depending on whether or not the tags (*t̅_{X}*,*t̅_{Y}*) are identical.

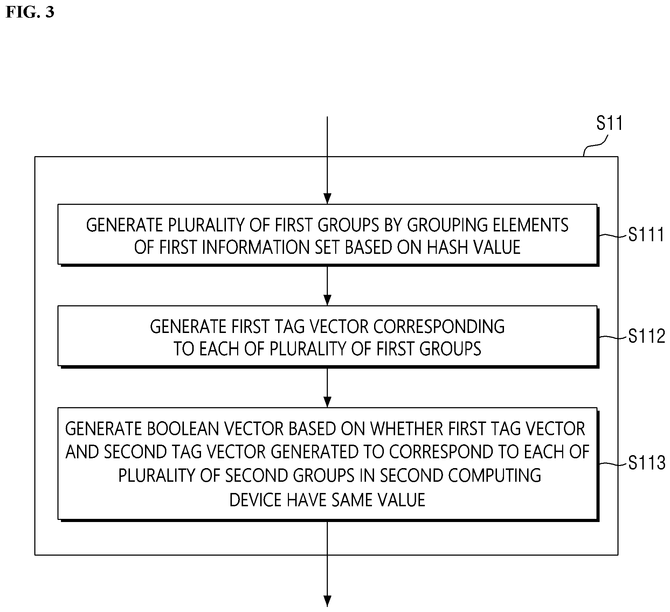

Specifically, referring to FIG. 3, operation S11 may include an operation S111 of generating a plurality of first groups 921 to 924 by grouping the elements of the first information set Y based on the hash value, an operation S112 of generating a first tag vector (*t̅_{Y}*) (see numeral 92 in FIG. 9) corresponding to each of the plurality of first groups 921 to 924, and an operation S113 of generating a Boolean vector (*b̅_{Y}*) based on whether the first tag vector (*t̅_{Y}*) 92 and a second tag vector (*t̅_{X}*) (see numeral 91 in FIG. 9) generated to correspond to each of the plurality of second groups 911 to 914 in the second computing device 10 have the same value.

As an exemplary embodiment, referring to FIG. 9 in relation to the operations S111 and S112, the first computing device 100 may generate the first tag vector (*t̅_{Y}*) 92 by grouping the elements of the first information set Y 902 stored therein into the plurality of first groups 921 to 924 based on the hash value and assigning a tag to each group. Similarly, the second computing device 10 may generate the second tag vector (*t̅_{X}*) 91 by grouping the elements of the second information set X 901 stored therein into the plurality of second groups 911 to 914 based on the hash value and assigning a tag to each group.

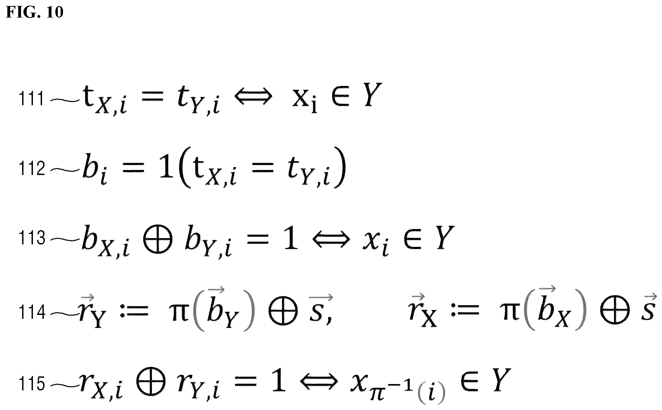

In this case, if the two tag vectors 91 and 92 are the same, the first tag vector (*t̅_{Y}*) 92 and the second tag vector (*t̅_{X}*) 91 may be generated as vectors that satisfy Equation 1 (see numeral 111 in FIG. 10) defined as each element of the second information set X being included in the first information set Y.

As an exemplary embodiment, the sizes (number of bits) of each element of the first tag vector (*t̅_{Y}*) 92 and each element of the second tag vector (*t̅_{X}*) 91 may be set to ℓ ≈ σ + log *N* (σ is a natural number greater than or equal to 1, and N is a length of the vector and is a natural number greater than or equal to 2). If the size of each element of the two tag vectors is set to be shorter than a reference value, a false-positive error in which *t*_{*X*,*i*} = *t_{Y,i}* even though not xᵢ ∈ *Y*, may occur, and if the size of each element of the two tag vectors is set to be longer than the reference value, the amount of calculation performed in each step of the PSU protocol may increase.

For this reason, if the size (number of bits) of each element of the two tag vectors is set to ℓ ≈ σ + log *N*, the probability of false-positive occurrence may be lowered to 2^{-σ} or less. In this case, σ may be set to, for example, 40, and may be set to a value smaller than or greater than 40 according to user's settings.

As an exemplary embodiment, in operation S113, the first computing device 100 may calculate a plurality of Boolean shares having a value of 1 if each element of the first tag vector (tlr) 92 and each element of the second tag vector (*t̅_{X}*) 91 are the same, and having a value of 0 if each element of the first tag vector (*t̅_{Y}*) 92 and each element of the second tag vector (*t̅_{X}*) 91 are not the same, using Equation 2 (see reference numeral 112 in FIG. 10).

From this, the first computing device 100 may obtain the Boolean vector (*b̅_{Y}*) for the first information set Y that satisfies Equation 3 (see numeral 113 in FIG. 10) by combining the plurality of Boolean shares calculated in operation S113. Similarly, the second computing device 10 may also obtain the Boolean vector (*b̅_{X}*) for the second information set X that satisfies Equation 3 (113). Accordingly, the length of the vector may be significantly reduced by generating the Boolean vector (*b̅_{Y}*) and a Boolean vector (*b̅_{X}*) from the first tag vector (*t̅_{Y}*) 92 and the second tag vector (*t̅_{X}*) 91. For example, the first tag vector (*t̅_{Y}*) 92 and the second tag vector (*t̅_{X}*) 91 may have a length of 64 bits, and the Boolean vector (*b̅_{Y}*) and the Boolean vector (*b̅_{X}*) may have a length of 1 bit.

Next, in operation S12, the first computing device 100 obtains a random vector for the first information set Y as a result of shuffling performed by using the Boolean vector -4 (*b̅_{Y}*) generated by the first computing device 100 as an input and using order information and encryption information selected by the second computing device 10 as inputs.

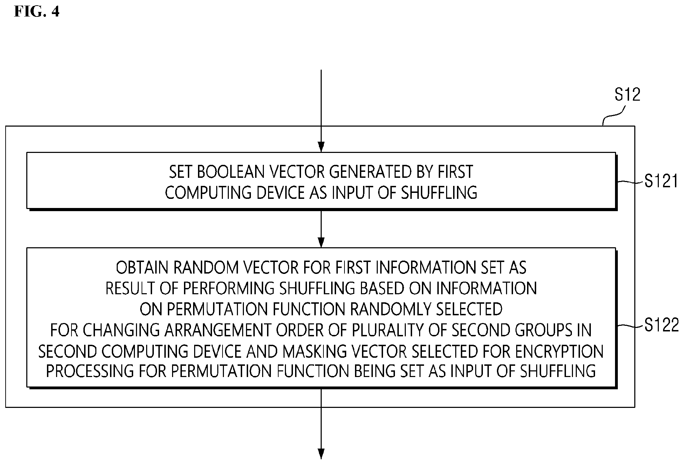

As an exemplary embodiment, as illustrated in FIG. 4, operation S12 may include an operation S121 of setting the Boolean vector generated by the first computing device as an input of shuffling, and an operation S122 of obtaining a random vector for the first information set Y as a result of performing the shuffling based on information on a permutation function (*π* ) randomly selected for changing an arrangement order of the plurality of second groups 911 to 914 in the second computing device 10 and a masking vector (*̅s̅*̅) selected for encryption processing for the permutation function being set as the input of shuffling.

As described above, according to operation S12, since the first computing device 100 uses the Boolean vector (*b̅_{Y}*) for the first information set Y as the input for shuffling, it is possible to significantly reduce the amount of communication compared to the case of using the first tag vector (*t̅_{Y}*) 92.

As an example, the first tag vector (*t̅_{Y}*) 92 may have a length of 64 bits, and the Boolean vector (*b̅_{Y}*) whose length is compressed compared to the first tag vector (*t̅_{Y}*) 92 may have a length of 1 bit. Accordingly, when the first tag vector (*t̅_{Y}*) is used as the input for shuffling, the amount of communication of O(ℓN log *N*) is required, but when the Boolean vector (*b̅_{Y}*) is used as the input for shuffling as in the exemplary embodiment of the present disclosure, the length of the vector input as input is compressed so that the same shuffling operation may be performed with only the amount of communication of O(N(log*N* + ℓ)).

Finally, in operation S13, the first computing device 100 generates information on a union (X U Y) of the first information set Y and the second information set X based on the random vector obtained through operation S12.

Operations S12 and S13 correspond to oblivious shuffling (OS) step 83 and oblivious transfer (OT) step 84 of the entire process of the PSU protocol illustrated in FIG. 8. In the OS step 83, a shuffling operation of taking the Boolean vectors (*b̅_{X}*, *b̅_{Y}*) generated through the ESG step 82 as the input is performed, and in the OT step 84, an operation of outputting a difference set (X-Y) of the information sets (X, Y) is performed by performing oblivious transfer (OT) using the random vectors (*r̅_{X}*, *r̅_{Y}*) obtained as a result of shuffling.

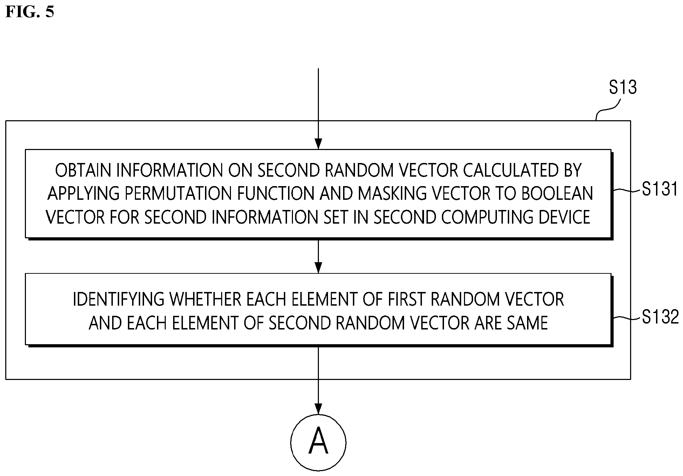

Specifically, referring to FIG. 5, operation S13 may include an operation S131 of obtaining, by the second computing device 10, information on a second random vector (*r̅_{X}*) calculated by applying the permutation function (*π* ) and the masking vector (*̅s̅*̅) to the Boolean vector (*b̅_{X}*) for the second information set X, and an operation S132 of identifying whether each element of the first random vector (*r̅_{Y}*) for the first information set Y obtained by the first computing device 100 and each element of the second random vector (*r̅_{X}*) for the second information set X stored in the second computing device 10 are the same.

As an exemplary embodiment, in operation S132, the first computing device 100 may obtain the first random vector (*r̅_{Y}*) for the first information set Y calculated using Equation 4 (see numeral 114 in FIG. 10). Similarly, the second computing device 10 may calculate the second random vector (*r̅_{X}*) for the second information set X using Equation 4 114.

Accordingly, the first computing device 100 may not know information on in what order the second computing device 10 shuffled the plurality of second groups 911 to 914, which are groups of the elements of the second information set X, through shuffling. That is, in the process of the first computing device 100 obtaining information on the union of the first information set Y and the second information set X, leakage of information on the second information set X stored in the second computing device 10 may be prevented through shuffling.

In addition, in operation S132, the first computing device 100 may determine whether each element of the second information set X is included in the first information set Y by identifying whether each element of the first random vector (*r̅_{Y}*) and each element of the second random vector (*r̅_{X}*) are the same as in Equation 5 (see numeral 115 in FIG. 10). Accordingly, the information on the union of the first information set Y and the second information set X may be generated through the process of analyzing whether each element of the second information set X is included in the first information set Y.

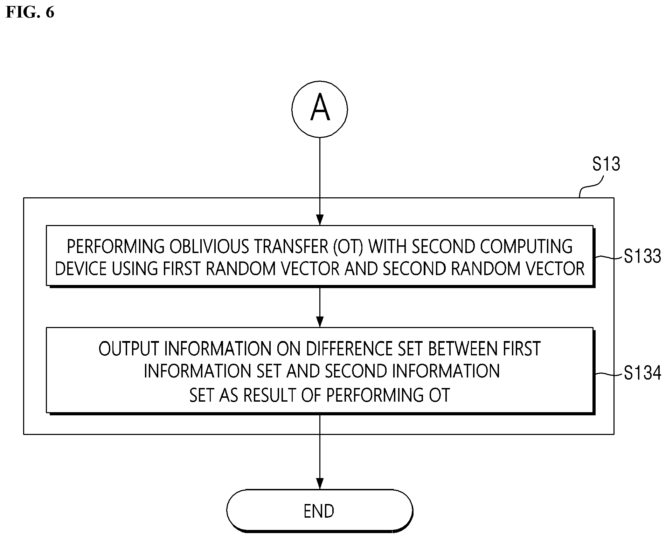

As an exemplary embodiment, referring to FIG. 6, in operation S13, operations S133 and operation S134 may be additionally performed after operations S131 and operation S132 are performed.

In operation S133, the first computing device 100 may perform oblivious transfer (OT) with the second computing device using the first random vector (*r̅_{Y}*) and the second random vector (*r̅_{X}*). Next, in operation S134, the first computing device 100 may output information on a difference set between the first information set and the second information set as a result of performing OT.

Meanwhile, the first computing device 100 may transmit the information on the union of the first information set Y and the second information set X generated through operations S11 to S13 to the server 20. That is, the calculation according to the PSU protocol may be performed by the first computing device 100, but the calculation result may be stored in the server 20 and managed.

According to the method according to the exemplary embodiment of the present disclosure as described above, in using the PSU protocol when transmitting data between the terminals, it is possible to safely provide the union information without leakage of information on intersection between the datasets. In addition, it is possible to prevent an increase in the amount of communication by adding a minimum calculation process for compressing the length of the vector input when performing shuffling to prevent additional information leakage of the dataset.

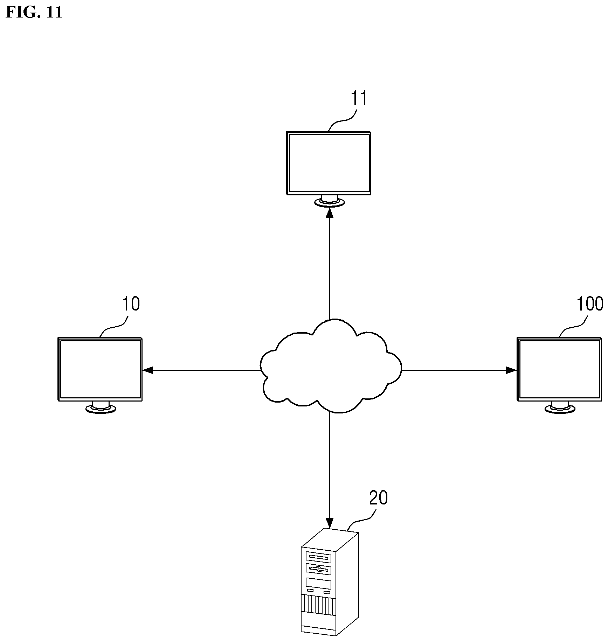

FIG. 11 is a system configuration diagram according to another exemplary embodiment of the present disclosure.

Referring to FIG. 11, a system according to an exemplary embodiment of the present disclosure includes a first computing device 100, a second computing device 10, a third computing device 11, and a server 20, and the first computing device 100 is connected to the second computing device 10, the third computing device 11, and the server 20 through a network.

The first computing device 100, the second computing device 10, and the third computing device 11 are terminals that store data generated by an execution of various types of installed applications and data stores data stored in its own database or acquired from an external device, and may be, for example, any one of a mobile computing device such as a smart phone, tablet personal computer (PC), laptop PC, personal digital assistant (PDA), and the like, and a stationary computing device such as a desktop PC.

The server 20 is a device that receives and stores calculation results between data sets stored in each of the first computing device 100, the second computing device 10, and the third computing device 11, and may be provided as a stationary computing device such as a server or a PC. Here, the calculation result between the datasets that the server 20 receives from at least one of the first computing device 100, the second computing device 10, and the third computing device 11 is, for example, information on a union of the datasets stored in the three devices. The server 20 may provide the calculation result between stored and managed datasets to an external terminal so as to be used for data analysis.

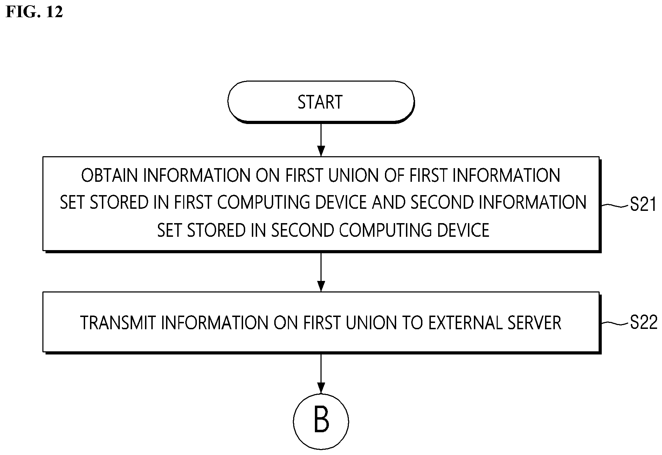

FIG. 12 is a flowchart for explaining a method for protecting data based on a PSU protocol according to another exemplary embodiment of the present disclosure.

A method for protecting data based on a PSU protocol according to an exemplary embodiment of the present disclosure may be executed by a computing device 100 illustrated in FIG. 14. The first computing device 100 executing the method according to the present exemplary embodiment may be a computing device having an application program execution environment. The first computing device 100 may be, for example, a device capable of performing an arithmetic function, such as a PC, server, laptop computer, or smart phone.

It should be noted that description of a subject performing some operations included in the method according to an exemplary embodiment of the present disclosure may be omitted, and in such case, the subject is the first computing device 100.

First, in operation S21, the first computing device 100 obtains information on a first union of a first information set stored in the first computing device 100 and a second information set stored in the second computing device 10 by communicating with the second computing device 10.

As an exemplary embodiment, in operation S21, the first computing device 100 may generate a Boolean vector for the first information set based on whether each of a plurality of first groups, which are groups of elements of the first information set stored therein, is the same as each of a plurality of second groups, which are groups of elements of the second information set stored in the second computing device 10. In this case, the first computing device 100 may generate a plurality of first groups by grouping the elements of the first information set based on the hash value, generate a first tag vector corresponding to each of the plurality of first groups, and generate a Boolean vector for the first information set based on whether the first tag vector and a second tag vector generated to correspond to each of the plurality of second groups by the second computing device 10 have the same value.

In addition, the first computing device 100 may generate information on a first union of the first information set and the second information set based on a random vector for the first information set obtained as a result of shuffling performed by using the Boolean vector generated by the first computing device 100 as an input and using order information and encryption information selected by the second computing device 10 as inputs.

Specifically, the first computing device 100 may obtain information on a second random vector for the second information set calculated by applying order information and encryption information to the Boolean vector to the second information set by the second computing device 10, and generate the information on the first union based on whether each element of the first random vector for the first information set is the same as each element of the second random vector for the second information set.

Next, in operation S22, the first computing device 100 transmits the information on the first union to the server 20.

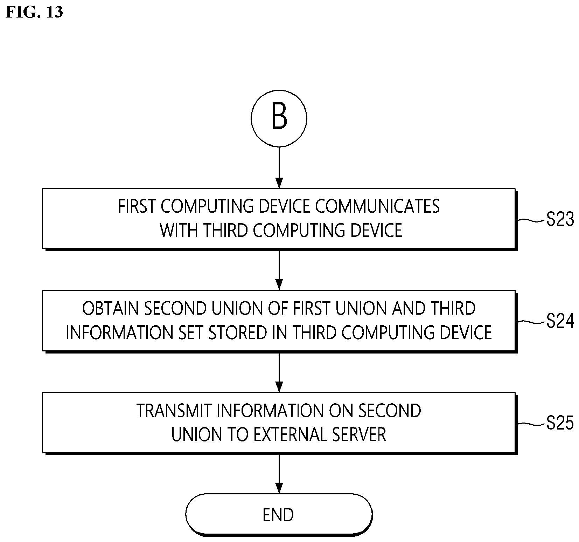

As an exemplary embodiment, referring to FIG. 13, the first computing device 100 may additionally perform operations S23 to S25 after performing operations S21 and S22.

In operation S23, the first computing device 100 may communicate with the third computing device 11, and in operation S24, the first computing device 100 may obtain a second union of the first union obtained by the first computing device 100 and a third information set stored in the third computing device 11.

Next, in operation S25, the first computing device 100 transmits information on the second union to the server 20.

According to the exemplary embodiment as described above, after generating information on a first union of information sets stored in two of the three terminals using the PSU protocol, a calculation of generating another second union between the generated union and an information set additionally stored in another terminal may be performed.

In addition, the information on the first union or the second union generated through the calculation based on the PSU protocol as described above may be transmitted to the server and stored and managed instead of being stored in each terminal.

According to the exemplary embodiment as described above, in performing a calculation based on the PSU protocol on datasets stored in a plurality of terminals, the information on the union of the datasets may be safely provided without leakage of information on the intersection between the datasets.

FIG. 14 is a hardware configuration diagram of an exemplary computing device 100.

Referring to FIG. 14, the computing device 100 may include one or more processors 101, a bus 107, a network interface 102, a memory 103, which loads a computer program 105 executed by the processors 101, and a storage 104 for storing the computer program 105.

The processor 101 controls overall operations of each component of computing device 100. The processor 101 may be configured to include at least one of a Central Processing Unit (CPU), a Micro Processor Unit (MPU), a Micro Controller Unit (MCU), a Graphics Processing Unit (GPU), or any type of processor well known in the art. Further, the processor 101 may perform calculations on at least one application or program for executing a method/operation according to various embodiments of the present disclosure. The computing device 100 may have one or more processors.

The memory 103 stores various data, instructions and/or information. The memory 103 may load one or more programs 105 from the storage 104 to execute methods/operations according to various embodiments of the present disclosure. An example of the memory 103 may be a RAM, but is not limited thereto.

The bus 107 provides communication between components of computing device 100. The bus 107 may be implemented as various types of bus such as an address bus, a data bus and a control bus.

The network interface 102 supports wired and wireless internet communication of the computing device 100. The network interface 102 may support various communication methods other than internet communication. To this end, the network interface 102 may be configured to comprise a communication module well known in the art of the present disclosure.

The storage 104 can non-temporarily store one or more computer programs 105. The storage 104 may be configured to comprise a non-volatile memory, such as a Read Only Memory (ROM), an Erasable Programmable ROM (EPROM), an Electrically Erasable Programmable ROM (EEPROM), a flash memory, a hard disk, a removable disk, or any type of computer readable recording medium well known in the art.

The computer program 105 may include one or more instructions, on which the methods/operations according to various embodiments of the present disclosure are implemented. When the computer program 105 is loaded on the memory 103, the processor 101 may perform the methods/operations in accordance with various embodiments of the present disclosure by executing the one or more instructions.

As an exemplary embodiment, a computer program 105 may include instructions for performing an operation of generating a Boolean vector for the first information set, based on whether or not each of a plurality of first groups that are groups of elements of the first information set stored in the first computing device 100 is the same as each of a plurality of second groups that are groups of elements of the second information set stored in the second computing device 10, an operation of obtaining a random vector for the first information set as a result of shuffling performed by using the Boolean vector generated by the first computing device as an input and using order information and encryption information selected by the second computing device as inputs, and operation of generating information on a union of the first information set and the second information set based on the random vector.

The technical features of the present disclosure described so far may be embodied as computer readable codes on a computer readable medium. The computer readable medium may be, for example, a removable recording medium (CD, DVD, Blu-ray disc, USB storage device, removable hard disk) or a fixed recording medium (ROM, RAM, computer equipped hard disk). The computer program recorded on the computer readable medium may be transmitted to other computing device via a network such as internet and installed in the other computing device, thereby being used in the other computing device.

Although operations are shown in a specific order in the drawings, it should not be understood that desired results can be obtained when the operations must be performed in the specific order or sequential order or when all of the operations must be performed. In certain situations, multitasking and parallel processing may be advantageous. According to the above-described embodiments, it should not be understood that the separation of various configurations is necessarily required, and it should be understood that the described program components and systems may generally be integrated together into a single software product or be packaged into multiple software products.

In concluding the detailed description, those skilled in the art will appreciate that many variations and modifications can be made to the preferred embodiments without substantially departing from the principles of the present disclosure. Therefore, the disclosed preferred embodiments of the disclosure are used in a generic and descriptive sense only and not for purposes of limitation.

## Claims

1. A method for protecting data based on a private set union (PSU) protocol, performed by a first computing device for transmitting and receiving data to and from a second computing device, the method comprising:
generating a Boolean vector for a first information set, based on whether or not each of a plurality of first groups that are groups of elements of the first information set stored in the first computing device is the same as each of a plurality of second groups that are groups of elements of a second information set stored in the second computing device;
obtaining a random vector for the first information set as a result of shuffling performed by using the Boolean vector generated by the first computing device as an input and using order information and encryption information selected by the second computing device as inputs; and
generating information on a union of the first information set and the second information set based on the random vector.

2. The method of claim 1, wherein the generating of the Boolean vector for the first information set includes generating the plurality of first groups by grouping the elements of the first information set based on a hash value.

3. The method of claim 1, wherein the generating of the Boolean vector for the first information set includes generating a first tag vector corresponding to each of the plurality of first groups.

4. The method of claim 3, wherein the generating of the Boolean vector for the first information set includes generating the Boolean vector based on whether the first tag vector and a second tag vector generated to correspond to each of the plurality of second groups in the second computing device have the same value.

5. The method of claim 4, wherein the generating of the Boolean vector includes:
calculating a plurality of Boolean shares having a value of 1 if each element of the first tag vector and each element of the second tag vector are the same and having a value of 0 if each element of the first tag vector and each element of the second tag vector are not the same; and
obtaining a Boolean vector for the first information set by combining the plurality of Boolean shares.

6. The method of claim 4, wherein sizes of each element of the first tag vector and each element of the second tag vector are set to 40 + log N (where N is a length of the vector and is a natural number greater than or equal to 2).

7. The method of claim 1, wherein the obtaining the random vector for the first information set as the result of shuffling includes:
setting the Boolean vector generated by the first computing device as an input of the shuffling; and
obtaining the random vector for the first information set as a result of performing the shuffling based on information on a permutation function randomly selected for changing an arrangement order of the plurality of second groups in the second computing device and a masking vector selected for encryption processing for the permutation function being set as the input of the shuffling.

8. The method of claim 7, wherein the random vector for the first information set is a first random vector, and
the generating of the information on the union of the first information set and the second information set includes:
obtaining information on a second random vector calculated by applying the permutation function and the masking vector to the Boolean vector for the second information set in the second computing device; and
identifying whether each element of the first random vector and each element of the second random vector are the same.

9. The method of claim 8, wherein the generating of the information on the union of the first information set and the second information set includes:
performing oblivious transfer (OT) with the second computing device using the first random vector and the second random vector; and
outputting information on a difference set between the first information set and the second information set as a result of performing the OT.

10. The method of claim 1, further comprising transmitting the information on the union of the first information set and the second information set to an external server.

11. A first computing device comprising:
a network interface configured to communicate with a second computing device;
one or more processors;
a memory configured to load a computer program executed by the processor; and
a storage configured to store the computer program,
wherein the computer program includes instructions for performing:
an operation generating a Boolean vector for a first information set, based on whether or not each of a plurality of first groups that are groups of elements of the first information set stored in the first computing device is the same as each of a plurality of second groups that are groups of elements of a second information set stored in the second computing device;
an operation of obtaining a random vector for the first information set as a result of shuffling performed by using the Boolean vector generated by the first computing device as an input and using order information and encryption information selected by the second computing device as inputs; and
an operation of generating information on a union of the first information set and the second information set based on the random vector.

12. The first computing device of claim 11, wherein the operation of generating of the Boolean vector for the first information set includes:
an operation of generating the plurality of first groups by grouping the elements of the first information set based on a hash value; and
an operation of generating a first tag vector corresponding to each of the plurality of first groups.

13. The first computing device of claim 11, wherein the operation of obtaining the random vector for the first information set as the result of shuffling includes:
an operation of setting the Boolean vector generated by the first computing device as an input of the shuffling; and
an operation of obtaining the random vector for the first information set as a result of performing the shuffling based on information on a permutation function randomly selected for changing an arrangement order of the plurality of second groups in the second computing device and a masking vector selected for encryption processing for the permutation function being set as the input of the shuffling.

14. The first computing device of claim 13, wherein the random vector for the first information set is a first random vector, and
the operation of generating of the information on the union of the first information set and the second information set includes:
an operation of obtaining information on a second random vector calculated by applying the permutation function and the masking vector to the Boolean vector for the second information set in the second computing device; and
an operation of generating the information on the first union based on whether each element of the first random vector and each element of the second random vector are the same.

15. The first computing device of claim 14, wherein the operation of generating of the information on the union of the first information set and the second information set includes:
an operation of performing oblivious transfer (OT) with the second computing device using the first random vector and the second random vector; and
an operation of outputting information on a difference set between the first information set and the second information set as a result of performing the OT.

## Patentansprüche

1. Verfahren zum Schutz von Daten auf der Basis eines Private Set Union (PSU)-Protokolls, das von einer ersten Computervorrichtung zum Senden und Empfangen von Daten an eine und von einer zweiten Computervorrichtung ausgeführt wird, wobei das Verfahren umfasst:
Erzeugen eines booleschen Vektors für einen ersten Informationssatz, basierend darauf, ob jede einer Vielzahl von ersten Gruppen, die Gruppen von Elementen des in der ersten Computervorrichtung gespeicherten ersten Informationssatzes sind, mit jeder einer Vielzahl von zweiten Gruppen, die Gruppen von Elementen eines in der zweiten Computervorrichtung gespeicherten zweiten Informationssatzes sind, übereinstimmt oder nicht;
Erhalten eines Zufallsvektors für den ersten Informationssatz als Ergebnis eines Mischens, das unter Verwendung des von der ersten Computervorrichtung erzeugten booleschen Vektors als eine Eingabe und unter Verwendung der von der zweiten Computervorrichtung ausgewählten Reihenfolgeinformationen und Verschlüsselungsinformationen als Eingaben durchgeführt wird; und
Erzeugen von Informationen über eine Vereinigung des ersten Informationssatzes und des zweiten Informationssatzes basierend auf dem Zufallsvektor.

2. Verfahren nach Anspruch 1, wobei das Erzeugen des booleschen Vektors für den ersten Informationssatz das Erzeugen der Vielzahl von ersten Gruppen durch Gruppieren der Elemente des ersten Informationssatzes basierend auf einem Hash-Wert beinhaltet.

3. Verfahren nach Anspruch 1, wobei das Erzeugen des booleschen Vektors für den ersten Informationssatz das Erzeugen eines ersten Tag-Vektors beinhaltet, der jeder der Vielzahl von ersten Gruppen entspricht.

4. Verfahren nach Anspruch 3, wobei das Erzeugen des booleschen Vektors für den ersten Informationssatz das Erzeugen des booleschen Vektors basierend darauf beinhaltet, ob der erste Tag-Vektor und ein zweiter Tag-Vektor, der erzeugt wird, um jeder der Vielzahl von zweiten Gruppen in der zweiten Computervorrichtung zu entsprechen, den gleichen Wert haben.

5. Verfahren nach Anspruch 4, wobei das Erzeugen des booleschen Vektors beinhaltet:
Berechnen einer Vielzahl von booleschen Teilen mit einem Wert von 1, wenn jedes Element des ersten Tag-Vektors und jedes Element des zweiten Tag-Vektors gleich sind, und mit einem Wert von 0, wenn jedes Element des ersten Tag-Vektors und jedes Element des zweiten Tag-Vektors nicht gleich sind; und
Erhalten eines booleschen Vektors für den ersten Informationssatz durch Kombinieren der Vielzahl von booleschen Teilen.

6. Verfahren nach Anspruch 4, wobei die Größen jedes Elements des ersten Tag-Vektors und jedes Elements des zweiten Tag-Vektors auf 40 + log N festgelegt sind (wobei N eine Länge des Vektors und eine natürliche Zahl größer oder gleich 2 ist).

7. Verfahren nach Anspruch 1, wobei das Erhalten des Zufallsvektors für den ersten Informationssatz als Ergebnis des Mischens beinhaltet:
Festlegen des von der ersten Computervorrichtung erzeugten booleschen Vektors als Eingabe für das Mischen; und
Erhalten des Zufallsvektors für den ersten Informationssatz als Ergebnis der Durchführung des Mischens basierend auf Informationen über eine Permutationsfunktion, die zufällig ausgewählt wurde, um eine Anordnungsreihenfolge der Vielzahl von zweiten Gruppen in der zweiten Computervorrichtung zu ändern, und eines Maskierungsvektors, der für die Verschlüsselungsverarbeitung für die Permutationsfunktion ausgewählt wurde, die als Eingabe für das Mischen festgelegt wurde.

8. Verfahren nach Anspruch 7, wobei der Zufallsvektor für den ersten Informationssatz ein erster Zufallsvektor ist, und
das Erzeugen der Informationen über die Vereinigung des ersten Informationssatzes und des zweiten Informationssatzes beinhaltet:
Erhalten von Informationen über einen zweiten Zufallsvektor, der durch Anwenden der Permutationsfunktion und des Maskierungsvektors auf den booleschen Vektor für den zweiten Informationssatz in der zweiten Computervorrichtung berechnet wird; und
Identifizieren, ob jedes Element des ersten Zufallsvektors und jedes Element des zweiten Zufallsvektors gleich sind.

9. Verfahren nach Anspruch 8, wobei das Erzeugen der Informationen über die Vereinigung des ersten Informationssatzes und des zweiten Informationssatzes beinhaltet:
Durchführen eines Oblivious Transfer (OT) mit der zweiten Computervorrichtung unter Verwendung des ersten Zufallsvektors und des zweiten Zufallsvektors; und
Ausgeben von Informationen über einen Differenzsatz zwischen dem ersten Informationssatz und dem zweiten Informationssatz als Ergebnis des Durchführens des OT.

10. Verfahren nach Anspruch 1, ferner umfassend das Übertragen der Informationen über die Vereinigung des ersten Informationssatzes und des zweiten Informationssatzes an einen externen Server.

11. Erste Computervorrichtung, umfassend:
eine Netzwerkschnittstelle, die konfiguriert ist, um mit einer zweiten Computervorrichtung zu kommunizieren;
einen oder mehrere Prozessoren;
einen Arbeitsspeicher, der konfiguriert ist, um ein Computerprogramm zu laden, das von dem Prozessor ausgeführt wird; und
einen Speicher, der konfiguriert ist, um das Computerprogramm zu speichern,
wobei das Computerprogramm Anweisungen zum Ausführen von Folgendem beinhaltet:
einer Operation zum Erzeugen eines booleschen Vektors für einen ersten Informationssatz, basierend darauf, ob jede einer Vielzahl von ersten Gruppen, die Gruppen von Elementen des in der ersten Computervorrichtung gespeicherten ersten Informationssatzes sind, mit jeder einer Vielzahl von zweiten Gruppen, die Gruppen von Elementen eines in der zweiten Computervorrichtung gespeicherten zweiten Informationssatzes sind, übereinstimmt oder nicht;
einer Operation zum Erhalten eines Zufallsvektors für den ersten Informationssatz als Ergebnis eines Mischens, das unter Verwendung des von der ersten Computervorrichtung erzeugten booleschen Vektors als eine Eingabe und unter Verwendung der von der zweiten Computervorrichtung ausgewählten Reihenfolgeinformationen und Verschlüsselungsinformationen als Eingaben durchgeführt wird; und
einer Operation zum Erzeugen von Informationen über eine Vereinigung des ersten Informationssatzes und des zweiten Informationssatzes basierend auf dem Zufallsvektor.

12. Erste Computervorrichtung nach Anspruch 11, wobei die Operation des Erzeugens des booleschen Vektors für den ersten Informationssatz beinhaltet:
eine Operation zum Erzeugen der Vielzahl von ersten Gruppen durch Gruppieren der Elemente des ersten Informationssatzes basierend auf einem Hash-Wert; und
eine Operation zum Erzeugen eines ersten Tag-Vektors, der jeder der Vielzahl von ersten Gruppen entspricht.

13. Erste Computervorrichtung nach Anspruch 11, wobei die Operation zum Erhalten des Zufallsvektors für den ersten Informationssatz als Ergebnis des Mischens beinhaltet:
eine Operation zum Festlegen des von der ersten Computervorrichtung erzeugten booleschen Vektors als Eingabe für das Mischen; und
eine Operation zum Erhalten des Zufallsvektors für den ersten Informationssatz als Ergebnis der Durchführung des Mischens basierend auf Informationen über eine Permutationsfunktion, die zufällig ausgewählt wurde, um eine Anordnungsreihenfolge der Vielzahl von zweiten Gruppen in der zweiten Computervorrichtung zu ändern, und
eines Maskierungsvektors, der für die Verschlüsselungsverarbeitung für die Permutationsfunktion ausgewählt wurde, die als Eingabe für das Mischen festgelegt wurde.

14. Erste Computervorrichtung nach Anspruch 13, wobei der Zufallsvektor für den ersten Informationssatz ein erster Zufallsvektor ist, und
die Operation zum Erzeugen der Informationen über die Vereinigung des ersten Informationssatzes und des zweiten Informationssatzes beinhaltet:
eine Operation zum Erhalten von Informationen über einen zweiten Zufallsvektor, der durch Anwenden der Permutationsfunktion und des Maskierungsvektors auf den booleschen Vektor für den zweiten Informationssatz in der zweiten Computervorrichtung berechnet wird; und
eine Operation zum Erzeugen der Informationen über die erste Vereinigung basierend darauf, ob jedes Element des ersten Zufallsvektors und jedes Element des zweiten Zufallsvektors gleich sind.

15. Erste Computervorrichtung nach Anspruch 14, wobei die Operation zum Erzeugen der Informationen über die Vereinigung des ersten Informationssatzes und des zweiten Informationssatzes beinhaltet:
eine Operation zum Durchführen eines Oblivious Transfer (OT) mit der zweiten Computervorrichtung unter Verwendung des ersten Zufallsvektors und des zweiten Zufallsvektors; und
eine Operation zum Ausgeben von Informationen über einen Differenzsatz zwischen dem ersten Informationssatz und dem zweiten Informationssatz als Ergebnis der Durchführung des OT.

## Revendications

1. Procédé de protection de données basé sur un protocole d'union d'ensembles privés (PSU), exécuté par un premier dispositif informatique pour transmettre et recevoir des données vers et depuis un deuxième dispositif informatique, le procédé comprenant les étapes suivantes :
générer un vecteur booléen pour un premier ensemble d'informations, en fonction du fait que chacun d'une pluralité de premiers groupes d'éléments du premier ensemble d'informations stocké dans le premier dispositif informatique soit identique ou non à chacun d'une pluralité de deuxièmes groupes qui sont des groupes d'éléments d'un deuxième ensemble d'informations stocké dans le deuxième dispositif informatique ;
obtenir un vecteur aléatoire pour le premier ensemble d'informations à la suite d'un mélange effectué en utilisant comme entrée le vecteur booléen généré par le premier dispositif informatique et en utilisant les informations d'ordre et les informations de cryptage sélectionnées comme entrées par le deuxième dispositif informatique ; et
générer des informations sur l'union du premier ensemble d'informations et du deuxième ensemble d'informations sur la base du vecteur aléatoire.

2. Procédé selon la revendication 1, dans lequel la génération du vecteur booléen pour le premier ensemble d'informations comprend de générer la pluralité de premiers groupes en regroupant les éléments du premier ensemble d'informations sur la base d'une valeur de hachage.

3. Procédé selon la revendication 1, dans lequel la génération du vecteur booléen pour le premier ensemble d'informations comprend de générer un premier vecteur d'étiquette correspondant à chacun de la pluralité de premiers groupes.

4. Procédé selon la revendication 3, dans lequel la génération du vecteur booléen pour le premier ensemble d'informations comprend de générer le vecteur booléen en fonction du fait que le premier vecteur d'étiquette et un deuxième vecteur d'étiquette généré pour correspondre à chacun de la pluralité de deuxièmes groupes dans le deuxième dispositif informatique aient ou non la même valeur.

5. Procédé selon la revendication 4, dans lequel la génération du vecteur booléen comprend les étapes suivantes :
calculer une pluralité de parts booléennes ayant une valeur de 1 si chaque élément du premier vecteur d'étiquette et chaque élément du deuxième vecteur d'étiquette sont identiques, et ayant une valeur de 0 si chaque élément du premier vecteur d'étiquette et chaque élément du deuxième vecteur d'étiquette ne sont pas identiques ; et
obtenir un vecteur booléen pour le premier ensemble d'informations en combinant la pluralité de parts booléennes.

6. Procédé selon la revendication 4, dans lequel les tailles de chaque élément du premier vecteur d'étiquette et de chaque élément du deuxième vecteur d'étiquette sont fixées à 40 + log N (où N est une longueur du vecteur et est un nombre naturel supérieur ou égal à 2).

7. Procédé selon la revendication 1, dans lequel l'obtention du vecteur aléatoire pour le premier ensemble d'informations en tant que résultat du mélange comprend les étapes suivantes :
définir le vecteur booléen généré par le premier dispositif informatique en tant qu'entrée du mélange ;
et
obtenir le vecteur aléatoire pour le premier ensemble d'informations en conséquence de l'exécution du mélange sur la base d'informations relatives à une fonction de permutation sélectionnée de manière aléatoire pour modifier l'ordre d'agencement de la pluralité de deuxièmes groupes dans le deuxième dispositif informatique, et un vecteur de masquage sélectionné pour le traitement de cryptage pour la fonction de permutation définie comme entrée du mélange.

8. Procédé selon la revendication 7, dans lequel le vecteur aléatoire pour le premier ensemble d'informations est un premier vecteur aléatoire, et
la génération des informations sur l'union du premier ensemble d'informations et du deuxième ensemble d'informations comprend les étapes suivantes :
obtenir des informations sur un deuxième vecteur aléatoire calculé en appliquant la fonction de permutation et le vecteur de masquage au vecteur booléen pour le deuxième ensemble d'informations dans le deuxième dispositif informatique ; et
identifier si chaque élément du premier vecteur aléatoire et chaque élément du deuxième vecteur aléatoire sont identiques.

9. Procédé selon la revendication 8, dans lequel la génération des informations sur l'union du premier ensemble d'informations et du deuxième ensemble d'informations comprend les étapes suivantes :
exécuter un transfert sans visibilité (OT) avec le deuxième dispositif informatique à l'aide du premier vecteur aléatoire et du deuxième vecteur aléatoire ; et délivrer en sortie des informations sur un ensemble de différences entre le premier ensemble d'informations et
le deuxième ensemble d'informations en conséquence de l'exécution du transfert sans visibilité, OT.

10. Procédé selon la revendication 1, comprenant en outre de transmettre les informations sur l'union du premier ensemble d'informations et du deuxième ensemble d'informations à un serveur externe.

11. Premier dispositif informatique comprenant :
une interface réseau configurée pour communiquer avec un deuxième dispositif informatique ;
un ou plusieurs processeurs ;
une mémoire configurée pour charger un programme informatique exécuté par le processeur ; et
une mémoire configurée pour stocker le programme informatique,
dans lequel le programme informatique comprend des instructions pour exécuter :
une opération comprenant de générer un vecteur booléen pour un premier ensemble d'informations, sur la base du fait que chacun d'une pluralité de premiers groupes qui sont des groupes d'éléments du premier ensemble d'informations stocké dans le premier dispositif informatique soit, ou non, le même que chacun d'une pluralité de deuxièmes groupes qui sont des groupes d'éléments d'un deuxième ensemble d'informations stocké dans le deuxième dispositif informatique ;
une opération comprenant d'obtenir un vecteur aléatoire pour le premier ensemble d'informations en conséquence d'un mélange effectué en utilisant le vecteur booléen généré par le premier dispositif informatique comme entrée, et en utilisant des informations d'ordre et des informations de cryptage sélectionnées par le deuxième dispositif informatique comme entrées ; et
une opération comprenant de générer des informations sur l'union du premier ensemble d'informations et du deuxième ensemble d'informations sur la base du vecteur aléatoire.

12. Premier dispositif informatique selon la revendication 11, dans lequel l'opération de génération du vecteur booléen pour le premier ensemble d'informations comprend :
une opération comprenant de générer la pluralité de premiers groupes en regroupant les éléments du premier ensemble d'informations sur la base d'une valeur de hachage ; et
une opération comprenant de générer un premier vecteur d'étiquette correspondant à chacun de la pluralité de premiers groupes.

13. Premier dispositif informatique selon la revendication 11, dans lequel l'opération d'obtention du vecteur aléatoire pour le premier ensemble d'informations en tant que résultat du mélange comprend :
une opération comprenant de définir le vecteur booléen généré par le premier dispositif informatique en tant qu'entrée du mélange ; et
une opération comprenant d'obtenir le vecteur aléatoire pour le premier ensemble d'informations en conséquence de l'exécution du mélange sur la base d'informations relatives à une fonction de permutation sélectionnée de manière aléatoire pour modifier l'ordre d'agencement de la pluralité de deuxièmes groupes dans le deuxième dispositif informatique, et un vecteur de masquage sélectionné pour le traitement de cryptage pour la fonction de permutation définie en tant qu'entrée de l'opération de mélange.

14. Premier dispositif informatique selon la revendication 13, dans lequel le vecteur aléatoire pour le premier ensemble d'informations est un premier vecteur aléatoire, et
l'opération comprenant de générer des informations sur l'union du premier ensemble d'informations et du deuxième ensemble d'informations comprend :
une opération comprenant d'obtenir des informations sur un deuxième vecteur aléatoire calculé en appliquant la fonction de permutation et le vecteur de masquage au vecteur booléen pour le deuxième ensemble d'informations dans le deuxième dispositif informatique ; et
une opération comprenant de générer des informations sur la première union sur la base du fait que chaque élément du premier vecteur aléatoire et chaque élément du deuxième vecteur aléatoire sont, ou non, identiques.

15. Premier dispositif informatique selon la revendication 14, dans lequel l'opération de génération des informations sur l'union du premier ensemble d'informations et du deuxième ensemble d'informations comprend :
une opération comprenant d'effectuer un transfert sans visibilité (OT) avec le deuxième dispositif informatique à l'aide du premier vecteur aléatoire et du deuxième vecteur aléatoire ; et
une opération comprenant de délivrer en sortie des informations sur un ensemble de différences entre le premier ensemble d'informations et le deuxième ensemble d'informations en conséquence de l'exécution du transfert sans visibilité, OT.
